(19) Europäisches Patentamt / European Patent Office / Office européen des brevets

(11) **EP 2 121 417 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(21) Anmeldenummer: **07871771.7**

(22) Anmeldetag: **20.12.2007**

(51) Int Cl.:
**B62D 15/00** *(2006.01)* **B62D 15/02** *(2006.01)*

(86) Internationale Anmeldenummer:
**PCT/DE2007/002298**

(87) Internationale Veröffentlichungsnummer:
**WO 2008/086767 (24.07.2008 Gazette 2008/30)**

(54) **VERFAHREN UND VORRICHTUNG ZUR ERMITTLUNG EINES LENKWINKELOFFSETS**

METHOD AND DEVICE FOR DETERMINING A STEERING ANGLE OFFSET

PROCÉDÉ ET DISPOSITIF POUR DÉTERMINER UN DÉCALAGE D'ANGLE DE BRAQUAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.01.2007 DE 102007002708**

(43) Veröffentlichungstag der Anmeldung:
**25.11.2009 Patentblatt 2009/48**

(73) Patentinhaber:
• **Conti Temic Microelectronic GmbH**
  **90411 Nürnberg (DE)**
• **Continental AG**
  **30165 Hannover (DE)**

(72) Erfinder:
• **ZELL, Andreas**
  **90411 Nürnberg (DE)**
• **GROTENDORST, Jörg**
  **90475 Nürnberg (DE)**

(56) Entgegenhaltungen:
**US-A1- 2003 212 476     US-A1- 2004 024 565**
**US-A1- 2004 061 500     US-A1- 2004 117 088**

**Beschreibung**

Die Erfindung betrifft ein Verfahren und eine Vorrichtung zur Ermittlung eines Lenkwinkeloffsets gemäß den unabhängigen Ansprüchen.

US 2003/212476 A1 (D1) beschreibt ein Verfahren zur Ermittlung eines Lenkwinkeloffsets in einem Fahrzeug mit einer Steuereinheit und einem Lenkwinkelsensor.

Die in einem Fahrzeug verwendeten Lenkwinkelsensoren unterliegen beim Einbau ins Fahrzeug einer gewissen Toleranz, das heißt, ihre Nulllage ist nicht exakt abgeglichen. Da bereits eine kleine Abweichung des Lenkwinkelsensors bei der Verwendung des gemessenen Lenkwinkels, zum Beispiel in fahrdynamischen Algorithmen in einem elektronischen Stabilitätsprogramm oder in einem Fahrwerksregelsystem, bei hohen Fahrgeschwindigkeiten zu großen Abweichungen der gerechneten Ergebnisse führen kann, muss der Fehler der Nulllage ermittelt und herausgerechnet werden.

Dies kann durch einen Lernalgorithmus während der Fahrt passieren. Üblicherweise wird dabei angenommen, dass der Fahrer im Mittel geradeaus fährt, der Lenkwinkel im Mittel also Null sein müsste. In der Regel wird ein Langzeitmittel aus den gemessenen Lenkwinkeln berechnet, um die Abweichung von der exakten Nulllage zu ermitteln.

Dieses einfache Verfahren hat insbesondere den Nachteil, dass in vielen Fällen die oben genannte Annahme nicht zutrifft, etwa wenn ein Fahrzeug regelmäßig zwischen Wohnung und Arbeitsstätte bewegt und an den Endpunkten gleichsinnig gewendet wird und sich dabei durch immer gleiche Routenwahl für die Hinfahrt und die Rückfahrt als gemittelter Wert für den Lenkwinkel insgesamt 360° ergibt.

Der Erfindung liegt die Aufgabe zugrunde, ein Verfahren der eingangs genannten Art zu schaffen, das einfach, schnell und zuverlässig eine Ermittlung des Lenkwinkeloffsets in einem Fahrzeug zulässt.

Diese Aufgabe wird erfindungsgemäß gelöst durch ein Verfahren mit den Merkmalen des Anspruchs 1. Der Kern der Erfindung besteht darin, dass zur Ermittlung eines Lenkwinkeloffsets in einem Fahrzeug mit' einem Steuergerät und einem Lenkwinkelsensor eine Vorauswahl der zur Berechnung des Lenkwinkeloffsets verwendeten Daten getroffen wird, indem zunächst eine erste Häufigkeitsverteilung des Lenkwinkels über eine Anzahl von gemessenen Werten des Lenkwinkels bestimmt wird. Dies geschieht in Abhängigkeit von mindestens einem dynamischen Fahrzeugparameter. Dadurch werden die Fahrsituationen, in denen der Fahrer mit großer Wahrscheinlichkeit im Mittel nicht geradeaus fährt, ausgeklammert. Im nächsten Schritt wird der Mittelwert des Lenkwinkels aus der ersten Häufigkeitsverteilung ermittelt. Anschließend wird geprüft, ob die Messwerte der Lenkwinkel in der ersten Häufigkeitsverteilung symmetrisch um den berechneten Mittelwert verteilt ist, und sofern die Symmetrie der ersten Häufigkeitsverteilung um den Mittelwert innerhalb einer vorgegebenen Toleranzgrenze gegeben ist, werden die Messwerte der ersten Häufigkeitsverteilung in eine zweite Häufigkeitsverteilung übernommen. Dabei ist die Gesamtzahl der Werte der gemessenen Lenkwinkel in der zweiten Häufigkeitsverteilung insbesondere die Summe der Anzahl der Werte von Lenkwinkeln der übernommenen ersten Häufigkeitsverteilungen. Falls die Symmetrie der ersten Häufigkeitsverteilung um den berechneten Mittelwert nicht innerhalb der vorgegebenen Toleranzgrenze gegeben ist, werden alle Messwerte der ersten Häufigkeitsverteilung verworfen und mit der Ermittlung einer neuen ersten Häufigkeitsverteilung begonnen. Sofern die Gesamtzahl der Lenkwinkel in der zweiten Häufigkeitsverteilung einen vorgegebenen Schwellwert überschreitet, wird der Lenkwinkeloffset aus dem Mittelwert der zweiten Häufigkeitsverteilung ermittelt. Durch dieses zweistufige Verfahren mit einer Vorauswahl von Messwerten durch Beschränkung auf Fahrsituationen, die einer ungefähren Geradeausfahrt entsprechen, wird vorteilhafterweise die Genauigkeit der ermittelten Lenkwinkelabweichung verbessert.

Da die Zahl der Messwerte in der zweiten Häufigkeitsverteilung kontinuierlich zunimmt, und der zur Verfügung stehende Zahlenbereich für die Zahl der Messwerte in der zweiten Häufigkeitsverteilung möglicherweise begrenzt ist, muss die zweite Häufigkeitsverteilung regelmässig oder spätestens bei drohender Überschreitung des zur Verfügung stehenden Zahlen bereichs reskaliert werden, damit weiterhin Messwerte aus der ersten Häufigkeitsverteilung in die zweite Häufigkeitsverteilung übernommen werden können. Dies geschieht durch Multiplikation der gesamten zweiten Häufigkeitsverteilung mit einem Faktor, der vorzugsweise zwischen Null und Eins liegt.

Ein Ermitteln der ersten Häufigkeitsverteilung gemäß Anspruch 2 beschränkt die Fahrsituationen, aus denen ein Lenkwinkel in die erste Häufigkeitsverteilung aufgenommen wird, auf Fahrsituationen, die über die Gesamtzeitdauer der Messwertaufnahme für die erste Häufigkeitsverteilung, einer ungefähren Geradeausfahrt entsprechen.

Ein Ermitteln der ersten Häufigkeitsverteilung gemäß Anspruch 3 führt zu einer einfachen Darstellung der Verteilung, die insbesondere einen geringen Rechenaufwand erfordert.

Eine Beschränkung der Breite der Lenkwinkelklasse gemäß Anspruch 4 ermöglicht eine ausreichende Genauigkeit bei der Ermittlung des Lenkwinkeloffsets bei sich in Grenzen haltendem Rechenaufwand.

Eine Überprüfung der Symmetrie der ersten Häufigkeitsverteilung gemäß Anspruch 5 stellt eine weitere Vorauswahl auf Fahrsituationen dar, die über die Gesamtzeitdauer der Messwertaufnahme für die erste Häufigkeitsverteilung einer ungefähren Geradeausfahrt entsprechen.

Durch die Vorgabe des Toleranzwertes gemäß Anspruch 6 lässt sich die Genauigkeit des Verfahrens variierten.

Ein Verfahren gemäß Anspruch 7 erlaubt insbesondere eine kontinuierliche Verbesserung bei der Ermittlung des Lenkwinkeloffsets.

Ein Verfahren gemäß Anspruch 8 verhindert insbesondere das Scheitern des Verfahrens bei Überschreiten des zur Verfügung stehenden Zahlenbereichs.

Eine weitere Aufgabe der Erfindung ist es, eine Vorrichtung zur Durchführung eines einfachen, schnellen und zuverlässigen Verfahrens zur Ermittlung eines Lenkwinkeloffsets in einem Fahrzeug zu schaffen

Diese Aufgabe wird durch eine Vorrichtung mit den Merkmalen des Anspruchs 9 gelöst. Die Vorteile der erfindungsgemäßen Vorrichtung entsprechen denen, die oben im Zusammenhang mit dem erfindungsgemäßen Verfahren ausgeführt wurden.

Weitere Vorteile und Merkmale der Erfindung ergeben sich aus der nachfolgenden Beschreibung eines Ausführungsbeispiels der Erfindung anhand der Zeichnung. Es zeigt:

Fig. 1 ein Ablaufdiagramm zur Ermittlung eines Lenkwinkeloffsets,

Fig. 2 eine diskrete erste Häufigkeitsverteilung von Lenkwinkeln

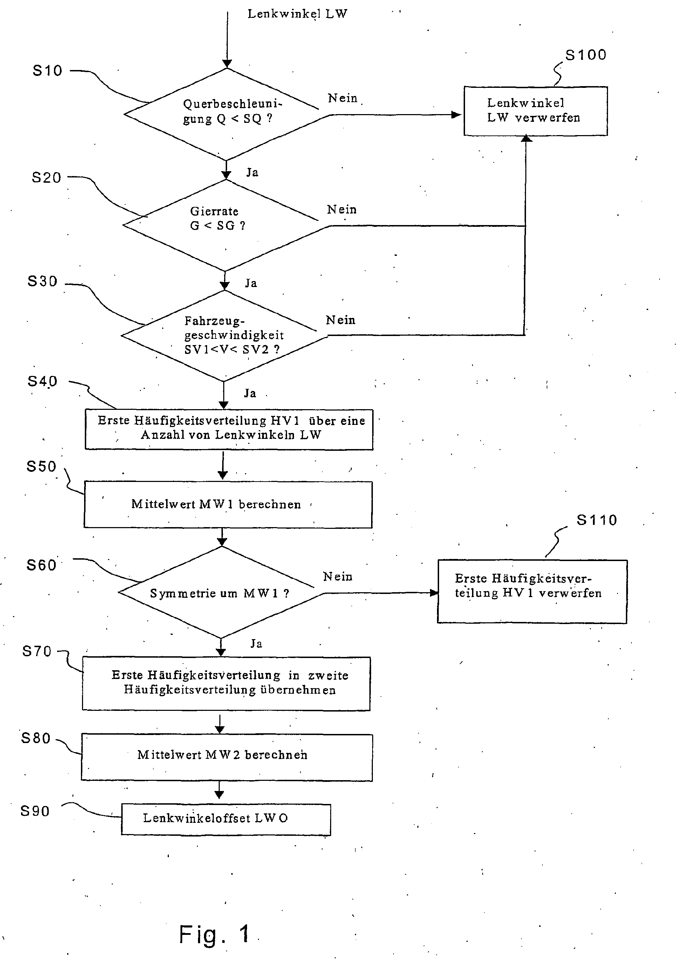

Das in Fig. 1 dargestellte Ablaufdiagramm zeigt ein Verfahren zur Ermittlung eines Lenkwinkeloffsets LWO in einem Fahrzeug, wobei durch die Maßnahmen in den Schritten S10, S20 und S30 Fahrsituationen, in denen der Fahrer mit großer Wahrscheinlichkeit im Mittel nicht geradeaus fährt, ausgeklammert werden. Der Lenk-winkel LW wird ermittelt und im Schritt S 10 wird geprüft, ob die Querbeschleunigung Q kleiner ist als ein vorgegebener Wert SQ. Ist das nicht der Fall, so wird daraus geschlossen, dass sich das Fahrzeug nicht in einer Geradeausfahrt befindet und der gemessene Wert für den Lenkwinkel LW wird im Schritt S 100 verworfen.

Ist die Bedingung erfüllt, wird im nächsten Schritt S20 geprüft, ob die Gierrate G kleiner ist als ein vorgegebener Wert SG. Als Gierrate oder Giergeschwindigkeit bezeichnet man in einem Fahrzeug die Winkelgeschwindigkeit bei einer Drehbewegung des Fahrzeugs um seine Hochachse. Ist G größer als SG, so wird daraus geschlossen, dass das Fahrzeug mit großer Wahrscheinlichkeit nicht geradeaus fährt und der gemessene Wert für den Lenkwinkel wird im Schritt S90 verworfen.

Ist die Bedingung im Schritt S20 erfüllt, wird im nächsten Schritt S30 geprüft, ob die Fahrzeuggeschwindigkeit V in einem vorgegebenen Geschwindigkeitsbereich zwischen SV1 und SV2 liegt. Dadurch kann zum Beispiel die Bedingung zur Erfassung des Lenkwinkels LW auf Fahrsituationen außerhalb geschlossener Ortschafen beschränkt werden.

Sobald eine bestimmte Anzahl von Lenkwinkeln LW erfasst ist, zum Beispiel 1000 an der Zahl, so wird im Schritt S40 aus diesen 1000 Messwerten für den Lenkwinkel LW eine erste Häufigkeitsverteilung HV1 erstellt. Eine einfache Art der Verteilung ist die diskrete Verteilung. Dazu werden bei der Erstellung der ersten Häufigkeitsverteilung HV1 die Lenkwinkel LW in Lenkwinkelklassen i mit der Breite $a_i$ und der entsprechenden Häufigkeit $y_i$ eingeteilt. Die Breite $a_i$ liegt insbesondere im Bereich zwischen 0,5 und 2,0 Winkelgrad. Als besonders vorteilhaft hat sich eine Breite $a_i$ von 1,4 Winkelgrad herausgestellt. Es ist auch möglich, die Winkelgradgesamtbreite der ersten Häufigkeitsverteilung HV1 zu beschränken. Vorzugsweise liegt die Winkelgradgesamtbreite der ersten Häufigkeitsverteilung HV1 bei +-5 Winkelgrad; denkbar wäre auch ein Bereich von +-10 Winkelgrad.

Aus den Lenkwinkeln LW der ersten Häufigkeitsverteilung HV1 wird im Schritt S50 der Mittelwert MW1 berechnet. Anschließend wird im Schritt S60 geprüft, ob die erste Häufigkeitsverteilung HV1 bis auf die vorgegebene Toleranz symmetrisch um den Mittelwert MW1 angeordnet ist. Ist dies nicht der Fall, so wird die Häufigkeitsverteilung HV1 im Schritt S110 verworfen.

Ist die Symmetrie der Häufigkeitsverteilung HV1 um den Mittelwert MW1 gegeben, so wird die Häufigkeitsverteilung HV1 im Schritt S70 in eine zweite Häufigkeitsverteilung HV2 übernommen. Dabei ist dann die Anzahl der erfassten Lenkwinkel LW in der zweiten Häufigkeitsverteilung HV2 gleich oder größer als die Anzahl der Lenkwinkel LW aus der ersten Häufigkeitsverteilung HV1. In der Regel wird die Anzahl der Lenkwinkel LW in der zweiten Häufigkeitsverteilung HV2 ein ganzzahliges Vielfaches der ersten Häufigkeitsverteilung HV1 oder ganz allgemein die Summe der Anzahl der Lenkwinkel LW aus allen übernommenen ersten Häufigkeitsverteilung HV1 sein. Sobald die Gesamtzahl der Lenkwinkel LW in der zweiten Häufigkeitsverteilung HV2 einen vorgegebenen Schwellwert S überschreitet, wird im Schritt S80 aus der zweiten Häufigkeitsverteilung HV2 der Mittelwert MW2 berechnet. Der Schwellwert S kann eine vorgegebene Zahl sein, im allgemeinen ein Vielfaches der in der ersten Häufigkeitsverteilung HV1 erfassten Lenkwinkel LW. Der Schwellwert kann aber auch durch die Begrenzung eines Speichers vorgegeben sein, in den die Lenkwinkel LW der zweiten Häufigkeitsverteilung HV2 eingelesen werden.

Beträgt der berechnete Mittelwert MW2 beispielsweise 1 Winkelgrad, so wird, im Schritt S90 ermittelt, dass der Lenkwinkeloffset LWO zum bisher angenommenen Lenkwinkelnull LWN (= Lenkwinkel LW gleich 0 Winkelgrad) 1 Winkelgrad beträgt. Das bedeutet, dass angenommen wird, dass beim Einbau des Lenkwinkelsensors 2 eine Verdrehung dieses Lenkwinkelsensors 2 um 1 Winkelgrad zur Nulllage der Lenksäule des Fahrzeugs stattgefunden hat, wobei die Nulllage der Lenksäule die Geradeausfahrt des Fahrzeugs definiert.

Um die Genauigkeit der Ermittlung des Lenkwinkeloffsets LWO zu verbessern, kann das Verfahren mit den Schritten S10 bis S110 kontinuierlich durchgeführt werden. Dazu wird beim aktuellen Durchgang des Verfahrens bei der Bestimmung des Lenkwinkeloffsets LWO im Schritt S90 als Lenkwinkelnull LWN der Lenkwinkeloffset LWO aus dem vorangegangenen Durchgang verwendet. Beim ersten Durchgang des Verfahrens zur Bestimmung des Lenkwinkeloffsets LWO im Schritt S90 wird wie oben beschrieben als Lenkwinkelnull LWN 0 Winkelgrad vorgegeben. Zudem, ist es möglich, bei der Berechnung des Lenkwinkeloffsets LWO im Schritt S90 die Lenkwinkelnull LWN und den im Schritt S80 berechneten Mittelwert MW2 zu gewichten.

Die folgende Tabelle 1 veranschaulicht die kontinuierliche Berechnung des Lenkwinkeloffsets LWO für die ersten drei Durchgänge mit dem Gewichtungsfaktor $g_{LWN}$ für die Lenkwinkelnull LWN und mit dem Gewichtungsfaktor $(1-g_{LWN})$ für den Mittelwert MW2. Die Winkelangaben sind in Winkelgrad. Der Gewichtungsfaktor $g_{LWN}$ für die Lenkwinkelnull LWN beträgt in diesem Fall 0,8 und dementsprechend der Gewichtungsfaktor $(1- g_{LWN})$ für den Mittelwert MW2 gleich 0,2.

Allgemeine Formel zur Berechnung des Lenkwinkeloffsets LWO:

$$LWO = [(LWN* \; g_{LWN}) + (MW2*(1- \; g_{LWN}))] \; ;$$

Tabelle 1:

| Durchgang | Lenkwinkelnull LWN | Mittelwert MW2 | LWO |
|-----------|--------------------|-----------------|------|
| 1 | 0 | 1,00 | 0,20 |
| 2 | 0,20 | 1,00 | 0,36 |
| 3 | 0,36 | 1,00 | 0,49 |

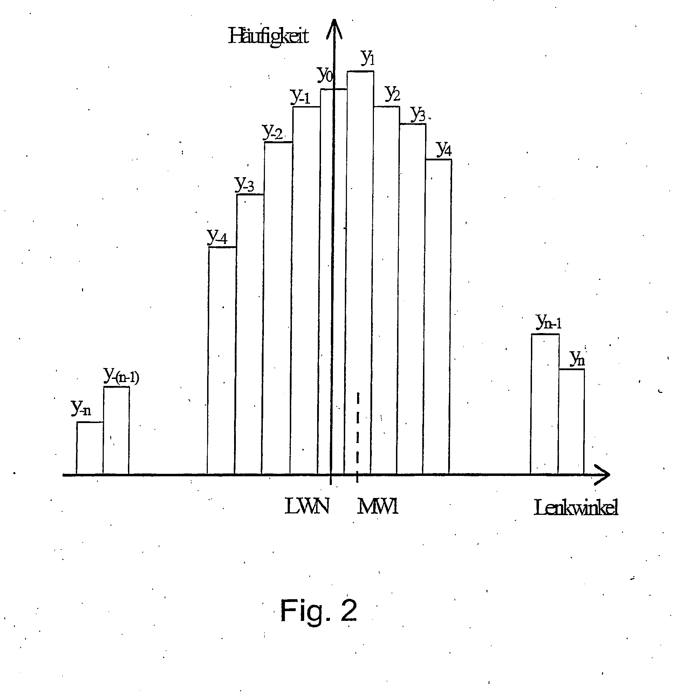

In Fig. 2 wird gezeigt, wie die im Schritt S60 durchgeführte Prüfung der Symmetrie der ersten Häufigkeitsverteilung HV1 erfolgt. Zunächst wird die Lenkwinkelklasse i=1 al die Lenkwinkelklasse ermittelt, die den Mittelwert MW1 enthält Anschließend wird geprüft, ob die Bedingung $|y_{1+k} - y_{1-k}| <=$ tol, mit k=1, 2, 3, ... , n, für die um den Mittelwert MW1 enthaltende Lenkwinkelldasse i=1 symmetrisch angeordneten Lenkwinkelklassenpaare (1+k, 1-k) erfüllt ist. Die Symmetrie der ersten Häufigkeitsverteilung HV1 ist dann gegeben, wenn die Bedingung $|y_{1+k} - y_{1-k}| <=$ tol für alle n Lenkwinkelklassenpaare erfüllt ist. Dabei ist tol ein vorgegebener Toleranzwert, der bestimmt wird aus der Multiplikation eines Faktors r mit dem arithmetischen Mittel aus $y_{i+k}$ und $y_{i-k}$. Der Faktor r liegt vorzugsweise zwischen 0,3 und 0,6.

Die folgende Tabelle 2 veranschaulicht die Prüfung der ersten Häufigkeitsverteilung HV1 auf Symmetrie mit i = 1, n =3 und r = 0,4:

Tabelle 2:

| k | $y_{1+k}$ | $y_{1-k}$ | tol | $|y_{1+k} - y_{1-k}|$ |
|---|-----------|-----------|-----|------------------------|
| 1 | 80 | 90 | 34 | 10 |
| 2 | 60 | 80 | 28 | 20 |
| 3 | 50 | 70 | 24 | 20 |

Die Bedingung $|y_{1+k} - y_{1-k}| <=$ tol ist in diesem Fall für jedes Lenkwinkelpaar erfüllt, die erste Häufigkeitsverteilung HV1 ist innerhalb der vorgegeben Toleranz symmetrisch um den Mittelwert MW1 angeordnet.

In den vorstehenden Ausführungsbeispielen wurde jeweils eine arithmetische Mittelwertbildung vorgenommen. Die Erfindung sei jedoch nicht ausschließlich darauf beschränkt, sondern lässt sich sehr vorteilhaft auch mit einer quadratischen Mittelwertbildung oder dergleichen durchführen.

Zusammenfassend kann festgestellt werden, dass durch das beschriebene Verfahren in völliger Abkehr von bisher bekannten Lösungen auf sehr elegante Weise jedoch nichts desto weniger sehr einfache Weise eine einfache und zuverlässige Ermittlung des Lenkwinkeloffsets in einem Fahrzeug realisierbar ist.

Die vorliegende Erfindung wurde anhand der vorstehenden Beschreibung so dargestellt, um das Prinzip der Erfindung und dessen praktische Anwendung bestmöglichst zu erklären. Jedoch lässt sich die Erfindung bei geeigneter Abwandlung selbstverständlich in zahlreichen anderen Ausführungsformen realisieren.

**Patentansprüche**

1. Verfahren zur Ermittlung eines Lenkwinkeloffsets (LWO) in einem Fahrzeug mit einer Steuereinheit (1) und einem Lenkwinkelsensor (2), mit den Schritten:

   a) Ermitteln einer ersten Häufigkeitsverteilung (HV1) des Lenkwinkels (LW) über eine Anzahl von Lenkwinkeln in Abhängigkeit von mindestens einem dynamischen Fahrzeugparameter (Q, G, V),
   b) Ermitteln des Mittelwerts (MW1) des Lenkwinkels (LW) aus der ersten Häufigkeitsverteilung (HV1),
   c) Prüfen, ob der Lenkwinkel (LW) in der ersten Häufigkeitsverteilung (HV1) symmetrisch um den Mittelwert (MW1) verteilt ist, und
   e) sofern die Symmetrie der ersten Häufigkeitsverteilung (HV1), um den Mittelwert (MW1) gegeben ist, Übernahme der ersten Häufigkeitsverteilung (HV1) in eine zweite Häufigkeitsverteilung (HV2), wobei die Anzahl der in der zweiten Häufigkeitsverteilung (HV2) erfassten Lenkwinkel (LW) gleich oder größer ist als die Anzahl der Lenkwinkel (LW) aus der ersten Häufigkeitsverteilung (HV1), und
   f) sofern die Gesamtzahl der Lenkwinkel (LW) in der zweiten Häufigkeitsverteilung (HV2) einen vorgegebenen Schwellwert (S) überschreitet, ermitteln des Lenkwinkeloffsets (LWO) aus dem Mittelwert (MW2) der zweiten Häufigkeitsverteilung (HV2).

2. Verfahren nach Anspruch 1, **dadurch gekennzeichnet, dass** der mindestens eine dynamische Fahrzeugparameter die Querbeschleunigung (Q), die Gierrate (G) oder die Fahrzeuggeschwindigkeit (V) ist.

3. Verfahren nach Anspruch 1 oder 2, **dadurch gekennzeichnet, dass** zum Ermitteln der ersten Häufigkeitsverteilung (HV1) die gemessenen Lenkwinkel (LW) in Lenkwinkelklassen (i) mit einer Breite ($a_i$) und mit einer entsprechenden Häufigkeit ($y_i$) eingeteilt werden.

4. Verfahren nach Anspruch 3, **dadurch gekennzeichnet, dass** die Breite ($a_i$) in einem Bereich zwischen 0,5 und 2,0 Winkelgrad liegt.

5. Verfahren nach einem der Ansprüche 3 oder 4, **dadurch gekennzeichnet, dass** zur Bestimmung der Symmetrie der ersten Häufigkeitsverteilung (HV1) um den Mittelwert (MW1) folgende Schritte angewendet werden:

   a) Ermitteln der Lenkwinkelklasse (i), die den Mittelwert (MW1) enthält,
   b) Prüfen, ob die Bedingung $|y_{i+k} - y_{i-k}| <= tol$, mit k=1, 2, 3, ... , n, für die um den Mittelwert (MW1) enthaltende Lenkwinkelklasse (i) symmetrisch angeordneten Lenkwinkelklassenpaare (i+k, i-k) erfüllt ist, und
   c) Feststellung der Symmetrie der ersten Häufigkeitsverteilung HV1, wenn die Bedingung $|y_{i+k} - y_{i-k}| <= tol$ für alle n Lenkwinkelklassenpaare erfüllt ist, wobei tol ein vorgegebener Toleranzwert ist.

6. Verfahren nach Anspruch 5, **dadurch gekennzeichnet, dass** der Toleranzwert tol bestimmt wird aus der Multiplikation eines Faktors r mit dem arithmetischen Mittel aus $y_{i+k}$ und $y_{i-k}$ und der Faktor r zwischen 0,3 und 0,6 liegt.

7. Verfahren nach einem der vorangehenden Ansprüche, **dadurch gekennzeichnet, dass** bei der Ermittlung des aktuellen Wert des Lenkwinkeloffsets (LWO) der vorangehende Wert des Lenkwinkeloffset (LWO) berücksichtigt wird und bei der Ermittlung des ersten Wert des Lenkwinkeloffsets (LWO) der vorangehende Wert des Lenkwinkeloffset (LWO) Null gesetzt wird.

8. Verfahren nach einem der vorangehenden Ansprüche, **dadurch gekennzeichnet, dass** die zweite Häufigkeitsverteilung (HV2) regelmässig oder bei Bedarf durch Multiplikation aller Werte in der zweiten Häufigkeitsverteilung (HV2) mit einem Faktor reskaliert wird.

9. Vorrichtung zur Ermittlung eines Lenkwinkeloffsets in einem Fahrzeug mittels eines Verfahrens nach einem der vorangehenden Ansprüche, wenigstens umfassend

   - einen Lenkwinkelsensor (2) zum Erfassen eines Lenkwinkels (LW)
   - eine Steuereinheit (1) zur Ermittlung des Lenkwinkeloffsets (LWO).

**Claims**

1. Method for determining a steering angle offset (LWO) in a vehicle having a control unit (1) and a steering angle sensor (2), having the steps:

   a) determination of a first frequency distribution (HV1) of the steering angle (LW) over a number of steering angles as a function of at least one dynamic vehicle parameter (Q, G, V),
   b) determination of the mean value (MW1) of the steering angle (LW) from the first frequency distribution (HV1),
   c) checking whether the steering angle (LW) in the first frequency distribution (HV1) is distributed symmetrically about the mean value (MW1), and
   e) in so far as the symmetry of the first frequency distribution (HV1) about the mean value (MW1) is given, transfer of the first frequency distribution (HV1) into a second frequency distribution (HV2), wherein the number of the steering angles (LW) detected in the second frequency distribution (HV2) is equal to or larger than the number of the steering angles (LW) from the first frequency distribution (HV1), and
   f) in so far as the total number of the steering angles (LW) in the second frequency distribution (HV2) exceeds a predefined threshold value (S), determination of the steering angle offset (LWO) from the mean value (MW2) of the second frequency distribution (HV2).

2. Method according to Claim 1, **characterized in that** the at least one dynamic vehicle parameter is the lateral acceleration (Q), the yaw rate (G) or the vehicle speed (V).

3. Method according to Claim 1 or 2, **characterized in that**, in order to determine the first frequency distribution (HV1), the measured steering angles (LW) are divided into steering angle classes (i) with a width ($a_i$) and with a corresponding frequency ($y_i$).

4. Method according to Claim 3, **characterized in that** the width ($a_i$) is in a range between 0.5 and 2.0 degrees of angle.

5. Method according to either of Claims 3 and 4, **characterized in that**, in order to determine the symmetry of the first frequency distribution (HV1) about the mean value (MW1), the following steps are applied:

   a) determination of the steering angle class (i) which contains the mean value (MW1),
   b) checking whether the condition $|y_{i+k} - y_{i-k}| \leq tol$, with k=1,2,3,...,n, for the steering angle class pairs (i+k, i-k) which are arranged symmetrically about the steering angle class (i) containing the mean value (MW1) is met, and
   c) definition of the symmetry of the first frequency distribution HV1 if the condition $|y_{i+k} - y_{i-k}| \leq tol$ for all n steering angle class pairs is met, wherein tol is a predefined tolerance value.

6. Method according to Claim 5, **characterized in that** the tolerance value tol is determined from the multiplication of a factor r by the arithmetic mean of $y_{i+k}$ and $y_{i-k}$, and the factor r is between 0.3 and 0.6.

7. Method according to one of the preceding claims, **characterized in that** during the determination of the current value of the steering angle offset (LWO) the preceding value of the steering angle offset (LWO) is taken into account, and during the determination of the first value of the steering angle offset (LWO) the preceding value of the steering angle offset (LWO) is set to zero.

8. Method according to one of the preceding claims, **characterized in that** the second frequency distribution (HV2) is rescaled on a regular basis or when necessary by multiplication of all the values in the second frequency distribution (HV2) by a factor.

9. Device for determining a steering angle offset in a vehicle by means of a method according to one of the preceding claims, comprising at least:

   - a steering angle sensor (2) for sensing a steering angle (LW) and
   - a control unit (1) for determining the steering angle offset (LWO).

**Revendications**

1. Procédé de détermination du décalage d'angle de braquage (LWO) d'un véhicule doté d'une unité de commande (1) et d'un détecteur (2) d'angle de braquage, le procédé comprenant les étapes qui consistent à :

a) déterminer une première répartition de fréquence (HV1) de l'angle de braquage (LW) sur un certain nombre d'angles de braquage en fonction d'au moins un paramètre dynamique (Q, G, V) du véhicule,

b) déterminer la valeur moyenne (MW1) de l'angle de braquage (LW) à partir de la première répartition de fréquence (HV1),

c) vérifier si l'angle de braquage (LW) de la première répartition de fréquence (HV1) est réparti symétriquement autour de la valeur moyenne (MW1) et

e) si la première répartition de fréquence (HV1) est symétrique autour de la valeur moyenne (MW1), reprendre la première répartition de fréquence (HV1) dans une deuxième répartition de fréquence (HV2), le nombre d'angles de braquage (LW) repris dans la deuxième répartition de fréquence (HV2) étant supérieur ou égal au nombre d'angles de braquage (LW) de la première répartition de fréquence (HV1) et

f) si le nombre total des angles de braquage (LW) de la deuxième répartition de fréquence (HV2) dépasse une valeur de seuil (S) prédéterminée, déterminer le décalage (LWO) d'angle de braquage par rapport à la valeur moyenne (MW2) de la deuxième répartition de fréquence (HV2).

2. Procédé selon la revendication 1, **caractérisé en ce que** le ou les paramètres dynamiques du véhicule sont l'accélération transversale (Q), le taux de lacet (G) et la vitesse (V) du véhicule.

3. Procédé selon les revendications 1 ou 2, **caractérisé en ce que** pour déterminer la première répartition de fréquence (HV1), les angles de braquage (LW) mesurés sont répartis dans des classes (i) d'angles de braquage d'une largeur ($a_i$) et d'une fréquence ($y_i$).

4. Procédé selon la revendication 3, **caractérisé en ce que** la largeur ($a_i$) est située dans une plage comprise entre 0,5 et 2,0 degrés d'angle.

5. Procédé selon l'une des revendications 3 ou 4, **caractérisé en ce que** pour déterminer la symétrie de la première répartition de fréquence (HV1) autour de la valeur moyenne (MW1), les étapes suivantes sont exécutées :

a) déterminer la classe (i) d'angles de braquage qui contient la valeur moyenne (MW1),

b) vérifier si la condition $|y_{i+k} - y_{i-k}| <= tol$, avec k=1, 2, 3, ..., n est satisfaite pour des paires (i+k, i-k) de classes d'angles de braquage disposées symétriquement autour de la classe (i) d'angles de braquage qui contient la valeur moyenne (MW1) et

c) confirmer la présence d'une symétrie dans la première répartition de fréquence (HV1) si la condition $|y_{i+k} - y_{i-k}| <= tol$ est satisfaite pour toutes les n paires de classes d'angles de braquage, tol étant une valeur de tolérance prédéterminée.

6. Procédé selon la revendication 5, **caractérisé en ce que** la valeur de tolérance tol est déterminée en multipliant un facteur r par la moyenne arithmétique de $y_{i+k}$ et $y_{i-k}$, le facteur r étant compris entre 0,3 et 0,6.

7. Procédé selon l'une des revendications précédentes, **caractérisé en ce que** lors de la détermination de la valeur en cours du décalage (LWO) d'angle de braquage, la valeur précédente (LWO) de l'angle de braquage est prise en compte et **en ce que** lors de la détermination de la première valeur du décalage (LWO) d'angle de braquage, la valeur précédente du décalage (LWO) d'angle de braquage est posée égale à zéro.

8. Procédé selon l'une des revendications précédentes, **caractérisé en ce que** la deuxième répartition de fréquence (HV2) est rééchelonnée régulièrement ou si nécessaire par multiplication de toutes les valeurs de la deuxième répartition de fréquence (HV2) par un facteur.

9. Dispositif de détermination du décalage d'angle de braquage d'un véhicule, qui recourt à un procédé selon l'une des revendications précédentes et qui comprend au moins :

- un détecteur (2) d'angle de braquage qui saisit l'angle de braquage (LW) et
- une unité de commande (1) qui détermine le décalage (LWO) de l'angle de braquage.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003212476 A1